# EUROPEAN PATENT APPLICATION

(11) **EP 2 128 440 A1**
(43) Date of publication of application: **02.12.2009**
(21) Application number: 06841773.2
(22) Date of filing: 28.12.2006
(51) Int. Cl.: F03D 9/00, H02K 17/42, H02M 5/45

(54) **ASYNCHRONOUS GENERATOR WITH CONTROL OF THE VOLTAGE APPLIED TO THE STATOR**

(71) Applicant: Wind To Power System, S.l., 28108 Madrid (ES)
(72) Inventor: CORCELLES PEREIRA, José Manuel, E-28108 Madrid (ES); RODRIGUEZ AMENEDO, José Luis, E-28108 Madrid (ES); ARNALTES GÓMEZ, Santiago, E-28108 Madrid (ES); SANTOS MARTÍN, David, E-28108 Madrid (ES)
(74) Representative: ABG Patentes, S.L.
(86) International application number: PCT/ES2006/000721
(87) International publication number: WO 2008/081049

(57) **Abstract**

Asynchronous generator with short-circuited rotor, wherein the stator of the generator is connected to the electric power grid through a first end of a first winding of a transformer, being the electric power grid connected through a direct current network to a second converter which has an output connected to a second winding of a the transformer. This configuration increases the overall performance, allows a smooth connection of the generator to the grid and ensures the power supply when there are variations in the electric power grid as the generator is also capable of exchanging reactive power with the grid and of controlling of the voltage applied to the stator.

## Description

### OBJECT OF THE INVENTION

The present invention relates, in general, to an asynchronous, or induction, generator with a short-circuited rotor that can be connected to a turbine, such as a wind turbine, to generate electric power that is injected into the electric power grid.

### BACKGROUND OF THE INVENTION

It is known in the prior art that there are currently a large number of asynchronous generators with a short-circuited rotor, such as the so-called squirrel cage rotor, coupled to turbines, e.g. wind turbines, and directly connected to a three-phase electric power grid by voltage-raising transformers. Consequently, said turbine configuration connected to a generator is used to produce electric power that reaches end consumers through the three-phase electric power grid.

An asynchronous generator with a short-circuited rotor, i.e. a squirrel cage rotor, connected to a wind turbine presents certain drawbacks such as the fact that a large current is required during start-up; the characteristic opposing torque presents a high rigidity that involves small variations in the rotation speed in the stable operating area and therefore large fluctuations in the electromagnetic torque and the real power transmitted to the electrical system; said configuration is not capable of working with supply voltages other than the nominal value and is therefore not capable of optimising the overall performance of the generator; it also requires reactive power from the grid to operate correctly; the above-described configuration is not capable of starting and working as a isolated system from the electric power grid. Similarly, it cannot be isolated from the external power fluctuations of the grid and it cannot help to damp them.

It is therefore necessary to develop a generator that can be connected to a turbine to generate and supply electric power to a grid, which is capable of being smoothly connected to the grid, reducing fluctuations in torque without adding electrical losses in the rotor, modifying the voltage supplied to the stator regardless of variations in the grid voltage, dynamically controlling the reactive power exchanged with the electric power grid and working in isolation from the electric power grid, thus avoiding some of the above-described problems.

### DESCRIPTION OF THE INVENTION

The present invention seeks to overcome or reduce one or more of the drawbacks explained above by means of a generator that can be connected to a turbine, such as a wind turbine, as claimed in claim 1. Embodiments of the invention are established in the dependent claims.

One object of the invention is to connect the generator's stator in series to an electric power grid by means of a first winding of a transformer so that the voltage applied to this winding is controlled by a second power converter, thereby controlling the voltage level of the generator's stator.

Moreover, the generator's stator is also connected to the same electric power grid by a first power converter that is connected by a direct current link to the second power converter, which in turn is connected to a second winding of the transformer, thus ensuring control of the voltage of the generator's stator in module and argument.

The double connection that is disclosed makes it possible to increase the overall performance of the electrical generator by reducing core losses in the generator.

Another object of the invention is to allow smooth connection of the generator to the electric power grid, thus guaranteeing generation quality at all times.

Another object of the invention is to guarantee the electric power supply when there are voltage variations in the electric power grid in balanced and unbalanced operation regime of the generator, helping to ensure the stability of the grid by supplying reactive power.

Another further object of the invention is that the generator is capable of dynamically exchanging reactive power with the grid, regardless of the level of load thereof.

Another object of the invention is that the generator is capable of generating a nominal output voltage when the electric power grid is not available due to a prior contingency.

Another further object of the invention is that the generator coupled to a wind turbine can be connected to the electric power grid when there is a low wind speed. It would therefore be possible to make use of locations with low wind speeds.

Another further object of the invention is to allow a certain degree of recovery of torque fluctuations, reducing fatigues and loads and also increasing the mechanical performance.

Another object of the invention is that the asynchronous generator with a short-circuited rotor shows a highly reliable and robust operation, with a high transitory overload capability

### BRIEF DESCRIPTION OF THE FIGURES

A more detailed explanation of the invention is given in the following description based on the attached figures in which:
- Figure 1: shows a block diagram of an aerogenerator according to the invention, and
- Figure 2: shows a vector diagram of the currents and voltages associated with the operation of the generator according to the invention.

### DETAILED DESCRIPTION OF A PREFERRED EMBODIMENT OF THE INVENTION

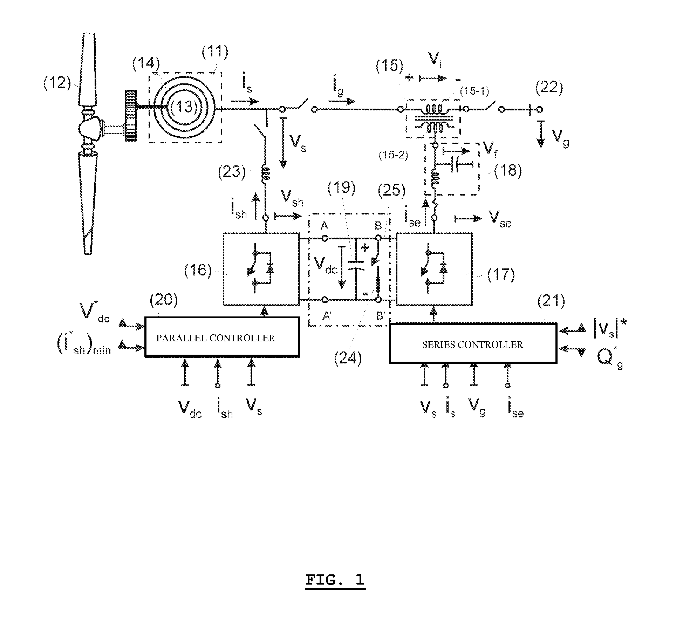

With reference to Fig. 1, a block diagram is shown below of an asynchronous, or induction, short-circuited rotor (the so-called squirrel cage rotor), together with the necessary means of control for its correct operation.

The asynchronous generator 11 with a short-circuited rotor can be connected to a turbine 12, such as a wind turbine, so that said turbine is coupled to the short-circuited rotor 13 that turns inside a stator 14 of the generator 11.

The stator 14 is connected in series to a first end of a first winding 15-1 of a transformer 15, so that an electric power grid 22 is connected to the second end of the first 15-1 winding of the transformer 15.

The stator 14 is also connected to an input of a first electric power converter 16 through an inductive filter 23, the output of which is connected in cascade by a DC connection to an input of a second electric power converter 17, which has an output that is connected to a second 15-2 winding of the transformer via a filter 18.

There is a capacitor 19 connected to the DC link, which stores electric power on the basis of the real power exchanged between the first 16 and second 17 converters.

There is also a resistance 24 connected to the DC link, which is controlled by a cut-off element such as a switch 25, the function of which is to ensure that the DC link voltage remains within a pre-determined interval of values for any operating mode of the generator 11.

The total electric power output of the generator 11 is combined in the transformer 15.

The first converter 16 comprises a set of switching elements so that each of them has a control terminal through which an on and/or off signal is applied to them.

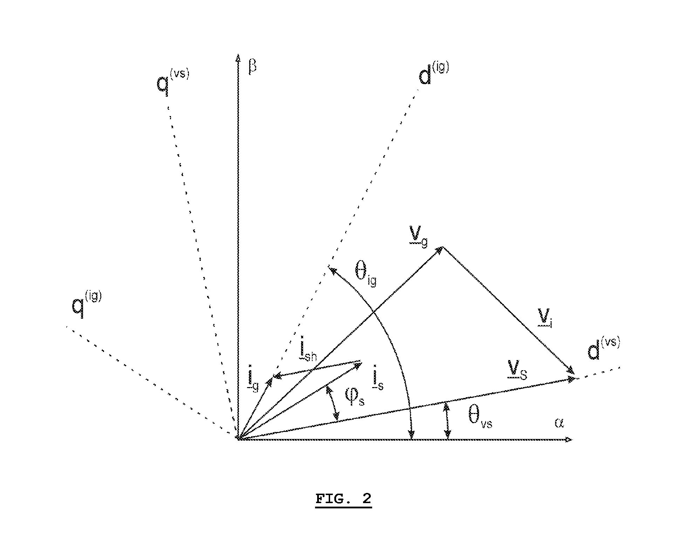

With reference to Figs. 1 and 2, a first controller 20 module generates and supplies said switching signals, and to carry out said tasks the first 20 controller calculates and/or receives a signal that is proportional to the converter 16 output current , **iₛₕ,** a signal that is proportional stator voltage **Vₛ,** and a signal that is proportional to the DC link voltage, **V_{DC}**.

The first controller 20 comprises a first microprocessor that stores and executes a control algorithm, such as vector control, direct control or the like, which governs the converter 16 output current, **iₛₕ.** This control regulates the DC voltage **V_{dc}** in the capacitor 19 at a constant reference value **V*_{dc},** such that real power is transferred instantly between the converter 16 and the converter 17, and it is also controlled in such a way that **iₛₕ** has the minimum possible value.

Similarly, the second converter 17 also comprises a set of switching elements so that each of them has a control terminal through which an on and/or off signal is applied to them.

A second controller 21 module generates and supplies said on or off signals, and to carry out said tasks the second controller 21 calculates and/or receives a signal that is proportional to the second converter 17 output current, **iₛₑ,** a signal that is proportional to the stator 14 voltage, **Vₛ,** a signal that is proportional to the grid 22 voltage, **Vg,** and a signal that is proportional to the total current injected into the grid 22, **i_{g}.**

The second controller 21 includes a second microprocessor that stores and executes an algorithm with which it regulates the voltage that is applied, in module, **|Vₛ|** and argument, to the generator 11 stator 14, following a control strategy for the total reactive power, **Q_{g},** that is injected into the electric power grid 22.

Both the first 20 and second 21 controllers therefore govern the first 16 and second 17 converters, respectively, so that they control the DC link voltage and the resulting and/or applied voltage, i. e. its module and its argument, to the stator 14 of the generator.

It should be observed that both the first 20 and second 21 controllers may work in coordination with each other or either one of them may work with the other one switched off, or the two of them may even be de-activated, the generation capacities being reduced in each case.

The means of governing the resulting and/or applied voltage to the stator 14 is based on controlling the voltage injected in series from the second converter 17 into the electric power grid 22 via the transformer 15. The voltage, **Vᵢ,** of the second converter 17 is vectorially added to the grid 22 voltage, **Vg.**

With reference to Figure 2, which shows stationary axes α-β on which the following spatial vectors are shown: stator 14 voltage **Vₛ,** grid 22 voltage **V_{g},** voltage **Vᵢ,** induced into the first winding 15-1 of the transformer 15 as a consequence of the control over the second 17 converter, stator 14 current **iₛ,** converter 16 output current, **iₛₕ.** Figure 2 shows the control principle that makes it possible to regulate the voltage applied, **Vₛ,** to the stator 14 of the generator 11 and the reactive power, **Q_{g},** that is injected into the electric power grid 22.

Suppose, for the moment, that the grid 22 voltage **V_{g}** is constant in terms of its RMS value and frequency. For certain specific operating conditions of the generator 11, a certain voltage, **Vᵢ,** is applied to give a stator 14 voltage, **Vₛ.** The stator current, **iₛ,** is determined for a given level of load and for a voltage applied to the stator 14, **Vₛ.** By controlling the output of the converter 16, **iₛₕ,** that will be in phase with the stator 14 voltage, **Vₛ,** it is possible to obtain the total current, **i_{g},** that is injected into the grid 22. Thus, the total real power supplied by the generator 11 is released and the total reactive power exchanged with the grid 22 is controlled.

Likewise, it should also be observed that the present invention can be implemented on a variety of computers that include microprocessors, a computer-readable storage medium, which includes volatile and non-volatile memory, and/or storage devices. The computer hardware logic that works with different sets of instructions is applied to the data to perform the above-described functions and to generate output data. The programs used by the computer hardware that is used as an example can preferably be implemented in different programming languages, including a high-level programming language that is designed for procedures or objects to communicate with a computer system. Each computer program is preferably stored in a computer-readable storage medium or device, e.g. ROM or magnetic disc, which can be programmed for general or specific use to configure and operate the computer when the storage medium or device is read by the computer in order to execute the above-described procedures. It can also be considered that the first and second controllers are implemented as a computer-readable storage medium, configured with a computer program, wherein the storage medium thus configured makes the computer work in a specific, pre-defined manner.

The two microprocessors of the first and second controllers may be interconnected or contained in a single piece.

The embodiments and examples established in this specification are presented as the best explanation of the present invention and its practical application to thus enable a person skilled in the art to use the invention. However, a person skilled in the art will recognise that the foregoing description and examples have been presented with the intention of illustrating just one example. The above description is not intended to be exhaustive or to limit the invention to the precise form described herein. Many modifications and variations are possible in view of the aforementioned teaching, whilst adhering to the spirit and scope of the following claims.

## Claims

1. Asynchronous generator with short-circuited rotor for generating electric power, **characterised in that** a stator (1) is connected in series to a first end of a first winding (15-1) of a transformer (15), and an electric power grid (22) is connected to the second end of the first (15-1) winding of the transformer (15).

2. Generator according to claim 1, **characterised in that** a stator (14) is connected to an input of a first (16) power converter, the output of which is connected by a DC connection to an input of a second (17) power converter, which has an output that is connected to a second (15-2) winding of the transformer (15).

3. Generator according to claim 2, **characterised in that** the stator (14) is connected to the input of a first (16) power converter via an inductor (23).

4. Generator according to claim 2 or 3, **characterised in that** the second (15-2) winding is connected to the transformer (15) via a filter (18).

5. Generator according to claim 4, **characterised in that** a capacitor (19) stores electric power when there is a flow of power between the first (16) and second (17) converters.

6. Generator according to claim 5, **characterised in that** the first (16) converter comprises a set of switching elements, wherein each of them has a terminal through which an on and/or off control signal, respectively, is applied to them.

7. Generator according to claim 6, **characterised in that** a first controller (20) module generates the on and/or off signals to apply them to the switching elements of the first converter (16) in order to regulate the converter (16) output current, **iₛₕ,** regulating the DC voltage **V_{dc}** in the capacitor (19) at a constant reference value **V*_{dc},** such that the real power is transferred instantly between the converter (16) and the converter (17), thus ensuring a minimum value of the output current from the converter (16), **iₛₕ.**

8. Generator according to claim 7, **characterised in that** the second converter (17) comprises a set of switching elements, wherein each of them has a terminal through which an on and/or off control signal, respectively, is applied to them.

9. Generator according to claim 8, **characterised in that** a second controller (21) generates the on and/or off signals to apply them to the switching elements of the second converter (17) so that it regulates the voltage applied in module, **|Vₛ|,** and argument to the stator (14) of the generator (11), following a strategy to control the total reactive power, **Q_{g},** that is injected into the electric power grid (22).

10. Generator according to claim 9, **characterised in that** the generator (11) is connected to a turbine (12).

11. Generator according to claim 10, **characterised in that** the turbine (12) is a wind turbine.

12. Method according to claim 1, **characterised in that** it also comprises the step of regulating the voltage applied to the capacitor (19) of the DC bus, following a pre-determined reference value (**V*_{dc}**) so that power is instantly transferred dynamically from the converter (16) to the converter (17) .

13. Method of controlling the electric power generated by a generator according to claim 12, **characterised in that** it comprises the step of regulating the output current from the converter (16) (**iₛₕ**) at a minimum value.

14. Method according to claim 13, **characterised in that** it comprises the step of regulating the resulting and/or applied voltage to the stator (14) of the generator (11), as the voltage of the second converter (17) is vectorially added to the grid (22) voltage.

15. Method according to claim 14, **characterised in that** it comprises the step of regulating the total reactive power, (**Q_{g}**), that is injected into the electric power grid (22).

16. A computer-readable medium with computer-readable instructions that are configured so that a computer can execute the method according to claims 12 to 15.
